# EUROPÄISCHE PATENTSCHRIFT

(11) **EP 1 504 482 B1**
(45) Veröffentlichungstag und Bekanntmachung des Hinweises auf die Patenterteilung: **09.08.2006**
(21) Anmeldenummer: 03749893.8
(22) Anmeldetag: 13.05.2003
(51) Int. Cl.: H01M 8/02

(54) **BIPOLARPLATTE UND VERFAHREN ZU DEREN HERSTELLUNG**
BIPOLAR PLATE AND METHOD FOR THE PRODUCTION THEREOF
PLAQUE BIPOLAIRE ET PROCEDE DE FABRICATION

(30) Priorität: 13.05.2002 DE 10221951
(43) Veröffentlichungstag der Anmeldung: 09.02.2005
(73) Patentinhaber: REINZ-Dichtungs-GmbH, 89233 Neu-Ulm (DE)
(72) Erfinder: HÖHE, Kurt, 89129 Langenau (DE); GAUGLER, Bernd, 89073 Ulm (DE); STRÖBEL, Raimund, 89077 Ulm (DE); TASCH, Dominique, 88487 Mietingen (DE)
(74) Vertreter: Golkowsky, Stefan
(86) Internationale Anmeldenummer: PCT/EP2003/005012
(87) Internationale Veröffentlichungsnummer: WO 2003/096457

(56) Entgegenhaltungen:
- WO-A-01/37362
- US-A- 5 981 098
- US-A1- 2002 055 028
- PATENT ABSTRACTS OF JAPAN vol. 1999, no. 09, 30. Juli 1999 (1999-07-30) -& JP 11 097039 A (YOYU TANSANENGATA NENRYO DENCHI HATSUDEN SYSTEM GIJUTSU KENKYU KUMIAI), 9. April 1999 (1999-04-09)

## Beschreibung

Die vorliegende Erfindung betrifft eine Bipolarplatte für Brennstoffzellensysteme sowie ein Verfahren zur Herstellung dieser Bipolarplatten.

Bei Brennstoffzellen, z.B. PEM-Brennstoffzellen (Polymerelektrolytmembran-Brennstoffzellen) werden üblicherweise mehrere Brennstoffzellen aufeinander geschichtet zu einem Brennstoffzellenstack. Die Abtrennung zwischen den einzelnen Zellen erfolgt durch Bipolarplatten, die folgende Funktionen übernehmen:
- Elektrische Kontaktierung der Elektroden der Brennstoffzellen und Weiterleitung des Stroms zur benachbarten Zelle (Serienschaltung der Zellen),
- Versorgung der Zellen mit Reaktionsgasen und Abtransport des erzeugten Wassers über eine entsprechende Kanalstruktur (Medienverteilerstruktur /Flowfield),
- Weiterleiten der bei der Reaktion in den Brennstoffzellen entstehenden Abwärme, sowie
- Abdichten der verschiedenen Gas- bzw. Kühlkammern gegeneinander und nach außen.

Es ist bekannt, Bipolarplatten aus grafitischen Werkstoffen im wesentlichen einstückig herzustellen. Der Vorteil grafitischer Werkstoffe liegt in ihrer hohen Korrosionsbeständigkeit und in Hinblick auf mobile Anwendungen auch auf ihrer geringen Materialdichte. Die Anfälligkeit auf Zugspannungen und die damit verbundene Sprödigkeit von grafitischen Werkstoffen engen jedoch die Wahl des Formgebungsverfahrens für die Strukturierung stark ein. Die spanende Formgebung stellt dabei keine Option für eine kostengünstige Massenproduktion dar.

Alternativ ist es auch möglich, metallische Bipolarplatten aus Metallen wie z.B. Edelstahl, Titan, Nickel herzustellen. Hierzu können zwei plattenförmige Metallabschnitte, welche korrespondiere Kanalstrukturen aufweisen, unter Bildung einer Bipolarplatte miteinander verlötet oder verklebt werden. Hierbei entsteht unter Umständen durch die Topographie der Kanalstrukturen zwischen den beiden Metallabschnitten ein Hohlraum, durch welchen Flüssigkeit führbar ist zur Kühlung eines Brennstoffzellensystems.

Nachteilig an auf diese Weise hergestellten Bipolarplatten ist jedoch, dass z.B. bei geklebten Ausführungsformen die elektrische Leitfähigkeit zwischen den Bipolarplatten stark eingeschränkt ist. Insbesondere bei gelöteten Ausführungsformen kann es zu einer Verschmutzung durch Flussmittel oder Lot kommen. Die Verschweißung der plattenförmigen Metallabschnitte, z.B. durch WIG-Verschweißung stellt aufgrund des hohen Wärmeeintrags und die dadurch entstehende Verformung der Metallabschnitte keine Alternative dar, da auf diese Art verformte Bipolarplatten keine glattflächige Auflagefläche mehr bieten und somit der Wirkungsgrad von Brennstoffzellensystemen, welche solche verwundenen Bipolarplatten enthalten, stark herabgesetzt wird.

Die US-A-5981098 zeigt Bipolarplatten für Polyelektrolytmembran-Brennstoffzellen. Diese Bipolarplatten sind aus Metallabschnitten aufgebaut. Als Material für die Metallabschnitte werden insbesondere Edelstahlplatten mit einer Stärke von 0,2 mm vorgeschlagen. Die verschweißten Metallteile bilden Hohlräume zwischen den Abschnitten, die für den Zu- und Abfluss von Gasen und Flüssigkeiten verwendet werden.

Patent Abstracts of Japan vol. 1999, no. 09, 30. Juli (1999-07-30)-& JP 11 097039 A (Yoyu Tansanengata Nenryo Denchi Hatsuden System Gijutsu Kenkyo Kumiai), 9. April 1999 (1999-04-09) offenbart die Verwendung eines YAG-Lasers sowie die Herstellung von Punktnähten. Auch hierin ist die Erzeugung von Hohlräumen offenbart. Das Dokument offenbart zudem, dass die Verwendung von Laserschweißen vorteilhaft ist.

Die WO 01/37362 A offenbart Bipolarplatten, bei denen laserverschweißte Metallabschnitte auch Kühlkanäle bilden können.

Die US 2002/055028 A1 offenbart die Verwendung von Laserschweißen allgemein bei der Herstellung von Bipolarplatten, wobei zwei im wesentlichen flache plattenförmige Metallabschnitte unter Bildung einer Bipolarplatte miteinander verbunden werden und die Verbindung der Metallabschnitte durch Laserstrahlschweißen erfolgt.

Der vorliegenden Erfindung liegt daher die Aufgabe zugrunde, eine schnell, einfach und kostengünstig herstellbare Bipolarplatte zu schaffen, welche ohne Verwindungen und somit geometrisch exakt zu fertigen ist.

Diese Aufgabe wird durch ein Verfahren nach Anspruch 1 sowie eine Bipolarplatte nach Anspruch 8 gelöst.

Dadurch, dass die Verbindung der Metallabschnitte unter Bildung einer Bipolarplatte durch Laserstrahlschweißen erfolgt, ist kein zusätzliches Material notwendig, um die Metallabschnitte miteinander zu verbinden. Es findet außerdem keine Verschmutzung durch Flussmittel, Lot oder Kleber statt, diese zusätzlichen Materialien können auch nicht den zwischen den Kanalstrukturen entstehenden Hohlraum (bzw. die Kanäle) verkleben. Außerdem ist eine hohe elektrische Leitfähigkeit der Bipolarplatte senkrecht zu den Metallabschnitten möglich, da der Übergangswiderstand zwischen den beiden verschweißten Metallabschnitten im Bereich der Verschweißung extrem gering ist. Hierdurch wird außerdem eine hohe Festigkeit der Schweißverbindung garantiert.

Für das Verfahren ist ein hoher Automatisierungsgrad möglich, es sind keine zusätzlichen Arbeitsgänge, wie etwa Vorbereitung der Lötstellen bzw. Auftrag von Kleber nötig, die Prozesszeiten können entsprechend kurz gehalten werden. Ein spezifischer Vorteil des Laserstrahlschweißens liegt darin, dass die Leistung extrem gut dosierbar ist und ein minimaler Wärmeeintrag sowie sehr feine Schweißnähte realisierbar sind.

Besonders vorteilhaft bei der erfindungsgemäßen Bipolarplatte ist, dass die zwei miteinander verschweißten Metallabschnitte zumindest bereichsweise zur Verringerung des Wärmeeintrags beim Schweißen eine unterbrochene Naht aufweisen. Durch eine derart unterbrochene Schweißnahtführung ist der Wärmeeintrag in die Metallabschnitte so gering wie nötig realisierbar, so dass die Verwindung durch Wärme sich auf ein tolerierbares Maß hin begrenzen lässt.

Besonders vorteilhaft ist, dass die plattenförmigen Metallabschnitte spaltfrei aufeinander angeordnet sind während der Laserverschweißung. Durch die spaltfreie Aufeinanderlegung der im Wesentlichen flachen plattenförmigen Metallabschnitt wird erreicht, dass durch den Laserstrahl nicht ausschließlicher der dem Strahlkopf nächstliegende Metallabschnitt erwärmt und unter Umständen sogar geschmolzen/verbrannt wird ohne eine Verbindung mit dem Strahlkopf weiter entfernt liegenden Teilabschnitt einzugehen.

Besonders vorteilhaft ist, dass die Plattenabschnitte im Bereich des Hohlraums im Wesentlichen spaltfreie Verbindungsstellen aufweisen. Diese können (quasi als "Inseln" im Flüssigkeitskreislauf) vorgesehen sein. Die hier miteinander verbundenen Bereiche der sich gegenüber liegenden Metallabschnitte sind hierbei jeweils durch Schweißnähte verbunden. Diese Schweißnähte können verschiedene Formen aufweisen. So sind z.B. linienförmige Anordnungen mit nebeneinander liegenden Schweißpunkten möglich (Punktnähte). Es ist aber auch möglich, Steppnähte vorzusehen (als hintereinander angeordnete aber voneinander beabstandete linienförmige Abschnitte). Punktnähte und Steppnähte sind dann besonders vorteilhaft, wenn ein besonders geringer Wärmeeintrag in die Metallabschnitte beabsichtigt ist.

Vorteilhafte Weiterbildungen der vorliegenden Erfindung werden in den abhängigen Ansprüchen angegeben.

Eine besonders vorteilhafte Weiterbildung des Verfahrens sieht vor, dass das Laserschweißen mittels eines YAG (Festkörper-Laser, bei dem das Trägermaterial aus Yttrium-Aluminium-Granat besteht) eines CO2-Lasers oder eines Diodenlasers durchgeführt wird. Hierbei ist vorteilhaft, dass der Laserstrahl jeweils in seiner Intensität variabel ist. Insbesondere bei Diodenlasern bietet sich ein Laserstrahlkopf mit einer Vielzahl von Diodenlasern an, so dass über einen "Laserblitz" blitzartig, ohne Bewegung des Laserstrahlkopfes, eine Verschweißung möglich ist; hierbei bietet sich auch eine "Maske" an, um nicht zu verschweißende Bereiche zu schützen.

Möglich ist, dass das Laserstrahlschweißen in einer Laserstrahlschweißvorrichtung stattfindet, wobei diese ein Spannsystem zur Fixierung der zu verschweißenden Metallabschnitte sowie ein Strahlkopf zum Ausstoß einer oder mehrerer Laserstrahlen aufweist.

Hierbei kann wahlweise das Spannsystem und/oder der Strahlkopf beweglich geführt sein, so dass Spannsystem bzw. Strahlkopf gegeneinander verschieblich sind. Dies kann z.B. durch ein achsgeführtes kartesisches System geschehen, welches unter Umständen auch automatisiert steuerbar ist.

Eine besonders vorteilhafte Ausführungsform des Strahlkopfes sieht vor, dass der Strahlkopf zur Strahlführung ein bewegliches Spiegelsystem aufweist, wobei nach Maßgabe der Spiegelbewegung unterschiedliche Bereiche der zu verschweißenden Metallabschnitte ansteuerbar sind. Hierdurch wird (infolge der geringen Trägheit der Spiegel) eine extrem schnelle Verschweißung möglich, es sind ohne weiteres 20 - 50 m pro Minute Schweißnaht an den Metallabschnitten realisierbar. Ebenso sind Leerwegsgeschwindigkeiten bis zu 1200 m/min möglich, was eine sehr variable Schweißabfolge zulässt.

Eine besonders vorteilhafte Ausführungsform des Spannsystems sieht vor, dass die Metallabschnitte bereichsweise formschlüssig umfasst werden. Hierdurch wird bereits weitgehend vermieden, dass ein Verziehen der Metallabschnitte durch Wärme erfolgt, zur Versteifung des formschlüssigen Spannsystems ist die Ausbildung von Versteifungsstegen möglich. Außerdem wird durch die formschlüssige Umfassung eine große Kontaktfläche zur Wärmeabführung ermöglicht, die zu dem Metallabschnitt hin gerichtete Oberfläche des Spannsystems kann zur besseren Wärmeabführung aus einem besonders gut Wärmeleitenden Material wie z.B. Kupfer oder Aluminium sein.

Außerdem kann das Spannsystem eine Einheit zur Schutzgasführung auf den zu verschweißenden Bereich hin aufweisen. Hierdurch wird eine eventuell in Gang gesetzte Oxidationsreaktion gestoppt bzw. eine Kühlung der Metallabschnitte erreicht.

Eine besonders gute Begrenzung der Verformbarkeit der Metallabschnitt wird dadurch erreicht, dass das Spannsystem an der dem Strahlkopf zugewandten Oberseite eine Strahlungsfreimachung zum Durchleiten eines Laserstrahls auf einen oben liegenden Metallabschnitt aufweist. Hierdurch wird einerseits der Zugang zu der Schweißstelle ermöglicht, andererseits wird auch in nächster Nähe hierzu die Wärmeabführung ermöglicht. Hierzu ist es außerdem vorteilhaft, dass das Spannsystem an der dem Strahlkopf abgewandten Unterseite eine Festschweißfreimachung zum Verhindern des Festschweißens eines Metallabschnitts an der formschlüssigen Form des Spannsystems vorsieht.

Besonders vorteilhafte Weiterbildungen des Verfahrens sehen vor, dass im Randbereich der Metallabschnitte eine im Wesentlichen umlaufende Verschweißung stattfindet zur Schaffung eines flüssigkeitsdichten Hohlraums zwischen den im Wesentlichen flachen Metallabschnitten. Zur Schaffung eines Kühlmittelkreislaufs kann der Hohlraum zwischen den Metallabschnitten eine oder mehrere Öffnungen zur Kühlmittelzu- und/oder - abfuhr aufweisen.

Es ist jedoch auch zu beachten, dass zur Stromweiterleitung durch die Bipolarplatte (d.h. senkrecht auf den im Wesentlichen flachen Metallabschnitten) eine besonders gute elektrische Verbindung zwischen diesen beiden Metallabschnitten und ein möglichst geringer Übergangswiderstand bestehen soll. Dies ist vorzugsweise durch im Laserstrahlschweißverfahren aufzubringende wellenförmige Nähte (Wellennähte) erreichbar.

Eine besonders vorteilhafte Weiterbildung sieht vor, dass die Stärke der Metallabschnitte im ungeschweißten Zustand 0,05 bis 3 mm beträgt. Als Materialien kommen für die Metallabschnitte insbesondere Edelstahl, Titan, Nickel, Nickellegierungen oder Aluminium in Frage, insbesondere jedoch Edelstahl 1.4404.

Weitere vorteilhafte Weiterbildungen der vorliegenden Erfindung werden in den übrigen abhängigen Ansprüchen angegeben.

Die Erfindung wird anhand einer Figur beispielhaft erläutert. Es zeigen:

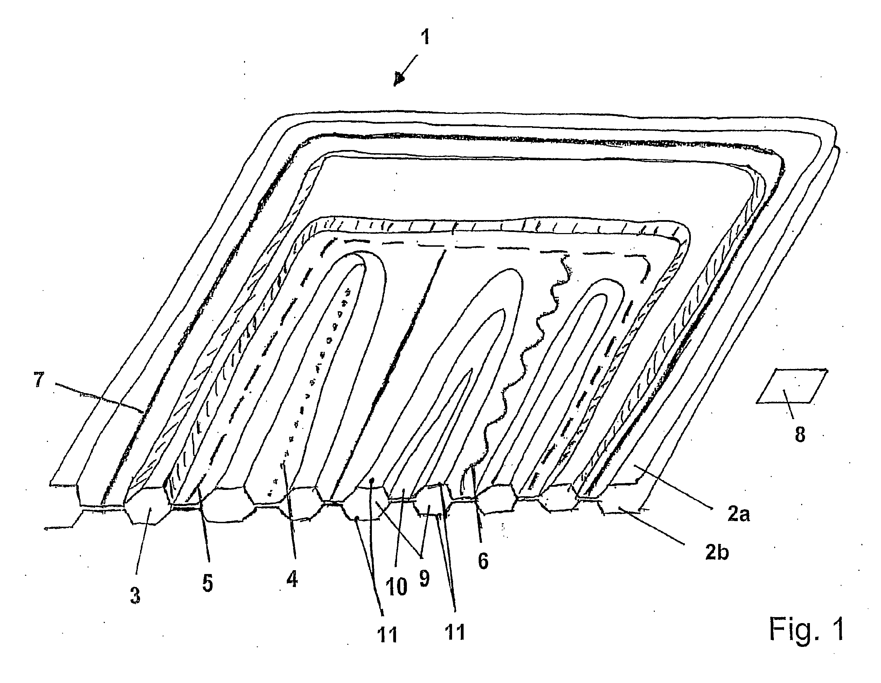

- Fig. 1: eine Schrägansicht einer geschnittenen erfindungsgemäßen Bipolarplatte als Teil eines Brennstoffzellensystems;
- Fig. 2: verschiedene Ausführungsformen von Doppeldichtnähten für erfindungsgemäße Bipolarplatten.

Die Figur zeigt im Querschnitt zwei im Wesentlichen plattenförmige Metallabschnitte 2a und 2b. Diese Metallabschnitte weisen im Wesentlichen komplementäre und bezüglich der Spiegelebene 8 spiegelbildliche Form auf (Die Platten müssen nicht spiegelbildlich sein. Wichtig ist, dass eine gemeinsame Berührfläche vorhanden ist, die verbunden werden kann. Die plattenförmigen Abschnitte 2a und 2b weisen eine unebene Topographie auf. Hierdurch entstehen an den jeweils voneinander weg weisenden Oberflächen der Metallabschnitte Kanalstrukturen. Zwischen den Metallabschnitten, auf deren zueinander hin weisenden Oberflächen, ist ein Hohlraum 3 angeordnet, welcher aus einem System mehrerer miteinander verbundenen Tunnels 9 besteht. Der Hohlraum 3 bzw. das System des Tunnels 9 wird durch eine im Wesentlichen die Metallabschnitte den Randbereich umlaufende Verschweißung flüssigkeitsdicht umrandet, wobei nicht dargestellte Öffnungen zur Kühlmittelzu- und/oder -abfuhr vorgesehen sind.

Die Metallabschnitte 2a und 2b sind durch verschiedene Schweißnähte miteinander verbunden. Dies sind zum einen Steppnähte 5, welche aus aneinander gereihten linienförmigen Abschnitten bestehen. Außerdem sind Punktnähte 4 gezeigt, welche aus einer Aneinanderreihung von Schweißpunkten bestehen. Es sind außerdem Wellennähte 6 gezeigt, welche einen durchgehenden und im Wesentlichen wellenförmigen Verlauf aufweisen. Schließlich ist eine im Randbereich gegebene durchgehende Naht 7 gezeigt. In der Figur ist diese durchgehende Naht 7 jedoch nicht in sich geschlossen, da lediglich eine mittig durchgetrennte Bipolarplatte zum Zwecke der besseren Sichtbarkeit des Hohlraumes 3 gezeigt ist.

Sämtliche der hier gezeigten Schweißnähte sind durch Laserstrahlschweißen entstanden. Bezüglich Einzelheiten des Laserschweißens bzw. der Laserstrahlschweißvorrichtung, in welcher dieses geschah, wird zur Vermeidung von Wiederholungen voll umfänglich und ausdrücklich auf die Beschreibungseinleitung mit den dort geschilderten vorteilhaften Weiterbildungen Bezug genommen .

Die Stärke der Metallabschnitte 2a, 2b beträgt im ungeschweißten Zustand 0,05 bis 3 mm, die in der Figur gezeigte geschnittene Bipolarplatte ist aus Edelstahl. Es ist außerdem anzumerken, dass für die hier gezeigten unterbrochenen Nahtausführungen (d.h. die Punkte 4 bzw. die Steppnähte 5) auch andere Schweißverfahren, wie z.B. Punktschweißen, Rollnahtschweißen und Plasmaschweißen anwendbar sind, da bei diesen Nahtformen bereits durch die Formgebung der Wärmeeintrag in die Metallabschnitte der Bipolarplatte begrenzt wird.

Die Bipolarplatte kann Bestandteil einer Brennstoffzellenanordnung sein, wie sie einleitend beschrieben wurde. Sämtliche der dort genannten Bestandteile können zu einem Brennstoffzellensystem gehören, in welchem eine Bipolarplatte 1 geschichtet ist. Hierbei dienen die Kanalstrukturen 10 zur Verteilung von Reaktionsgasen bzw. Abtransport von erzeugtem Wasser (die Kanalstrukturen 10 bilden ein sogenanntes "Flowfield"). Diese Kanalstrukturen 10 sind hierbei Vertiefungen zwischen den Tunnels 9, welche Erhebungen 11 aufweisen. Auf diese Erhebungen 11 können flächig z.B. Diffusionsschichten zur Gasverteilung oder Stromweiterleitung aufgelegt sein, welche vollflächig mit darauf angebrachten Elektroden von Brennstoffzellen verbunden sind.

Die erfindungsgemäße Bipolarplatte zeichnet sich insbesondere dadurch aus, dass sie einerseits kostengünstig herstellbar ist und andererseits hohe Anforderungen an die Dichtigkeit sowie die gute Stromweiterleitung durch die Bipolarplatte hindurch bietet.

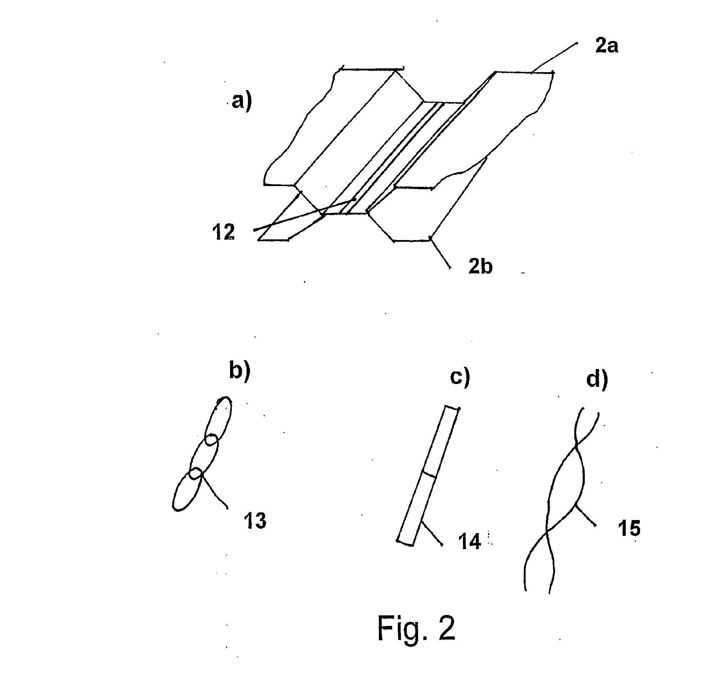

Fig. 2 zeigt verschiedene Ausführungsformen einer erfindungsgemäßen Bipolarplatte mit Doppeldichtnähten. Es sind darüber hinaus aber auch weitere Ausführungsformen von Mehrfachdichtnähten möglich; prinzipiell sind also beliebige Anzahlen mehrerer nebeneinander liegender Dichtnähte realisierbar. Zur Verdeutlichung ist in Fig. 2a, Beispiel a) ein Ausschnitt einer erfindungsgemäßen Bipolarplatte gezeigt, welcher Teile von plattenförmigen Abschnitten 2a sowie 2b zeigt, welche abschnittsweise über eine Doppeldichtnaht miteinander verbunden sind.

Nach Fig. 2, Beispiel a) ist diese Doppeldichtnaht durch zwei parallel zueinander verlaufende Schweißnähte realisiert.

Beispiele b) bis d) zeigen verschiedene weitere Möglichkeiten für Doppeldichtnähte. Der Nahtverlauf erfolgt hierbei entlang derselben Strecke wie die Doppeldichtnaht 12 in Beispiel a), zur besseren Übersichtlichkeit sind in Beispielen b) bis d) jedoch die Schweißlinienverläufe (ohne Bipolarplatte) gezeigt.

Beispiel b) zeigt eine Doppeldichtnaht 13. Diese besteht aus mehreren ovalförmig geschlossenen Schweißlinien, wobei die Ovale sich linienförmig aneinander anschließen und bereichsweise überschneiden.

Beispiel c) zeigt eine Doppeldichtnaht 14, bei welcher rechteckförmige Kammern sich aneinander anschließen und somit die Doppeldichtnaht 14 bilden.

Beispiel d) zeigt zwei sich periodisch kreuzende Schlangenlinien, welche eine Doppeldichtnaht 15 bilden, welche ebenfalls einzelne kammerförmige Abschnitte voneinander trennt.

Für sämtliche der Beispiele a) bis d) sei betont, dass bezüglich der einzelnen Schweißnaht hier sämtliche Optionen wie oben geschildert anwendbar sind.

Darüber hinaus besteht der Vorteil von Doppeldichtnähten darin, dass die Flüssigkeitsdichtigkeit dieser Doppeldichtnaht gegenüber einfachen Nähten deutlich erhöht wird und auch der z.B. elektrische Kontakt zwischen den plattenförmigen Abschnitten 2a und 2b.

Eine besonders hohe Dichtigkeit bieten die Kammersysteme nach Beispielen b) bis d), da hierin selbst bei Leckage lediglich einzelne, voneinander getrennte Kammern betroffen sind.

Ein besonders vorteilhafter Aspekt der vorliegenden Erfindung ist die Minimierung des Wärmeeintrags bei der Herstellung von Bipolarplatten, da insbesondere bei dünnen metallischen Platten ein Verziehen zu befürchten ist, welches unbedingt minimiert werden sollte. Sehr dünne Metallplatten sind u.a. bei Brennstoffzellenanwendungen für den mobilen Bereich, bei dem das Gewicht eine hohe Rolle spielt, sehr wichtig.

Diese Minimierung erfolgt auf verschiedene Weise.

Zum einen ist eine Laserstrahlschweißvorrichtung vorzusehen, welche unterbrochene Nähte zur Schweißverbindung, insbesondere zur Laserschweißverbindung, der beiden Platten dient, welche die Bipolarplatte aufbauen. Hier bietet sich insbesondere das "Scannerschweißen" an. Hierbei wird, wie oben ausführlich beschrieben, mittels eines Spiegels der Laserstrahl umgelenkt, so dass praktisch ohne Zeitverlust räumliche Sprünge beim Laserschweißen möglich sind, d.h. es nicht notwendig ist, eine kontinuierliche Schweißnaht zu ziehen. Hierbei sollte darauf geachtet werden, dass abwechselnd unterschiedliche Bereiche der Platte geschweißt werden, um somit eine Homogenisierung des Wärmeeintrags räumlich und zeitlich zu erreichen, so dass die Platte während des Schweißvorgangs gleichmä-βig und nicht zu stark erwärmt wird. Dies ist ein beträchtlicher Vorteil gegenüber einem von nur einer Stelle aus fortschreitenden Schweißen, was zu einem Verziehen der Bipolarplatte führen würde.

Hierbei ist außerdem die Zuführung von Schutzgas auch auf den Außenseiten der späteren Bipolarplatte sinnvoll, da hierdurch die Oxidation im Bereich der Schweißnähte minimiert wird und dadurch spätere Oxidablagerungen, welche den Protonenfluss in einer Brennstoffzellenmembran behindern könnten, vermieden werden. Hierdurch wird der Wirkungsgrad einer späteren Bipolarplatte nochmals erhöht.

Die unterbrochenen Schweißlinien können die verschiedensten Ausführungsformen haben, es können Aneinanderreihungen punktförmiger Verschweißungen sein oder auch gekrümmte oder gerade Schweißlinien bzw. abwechselnd Schweißlinien und Schweißpunkte. Hierbei ist es optimal, wenn der maximale Abstand zwischen zwei Schweißelementen (d.h. Linien bzw. Punkten) weniger als 2 cm, vorzugsweise weniger als 1,5 cm beträgt. Die Mindestlänge von geschweißten Bereichen sollte hierbei stets so sein, dass auch bei einem hohen Flüssigkeitsdruck innerhalb der Bipolarplatte ein sicherer Zusammenhalt der beiden Platten (und kein "Aufblasen") gesichert ist.

Der Hauptaspekt (neben der Flüssigkeitsdichtigkeit) ist der elektrische Kontakt zwischen beiden Platten der Bipolarplatte, primär durch die Vermeidung langer Stromwege.

Hierzu werden vorzugsweise in der Laserstrahlschweißvorrichtung zwei Platten spaltfrei aneinander gelegt und dann miteinander verschweißt. Durch die hohe Anzahl der Schweißpunkte ist über das gesamte aktive Feld hinweg ein kurzer elektrischer Weg gegeben, so dass der Wirkungsgrad der Brennstoffzellenanordnung hoch ist. Zusätzlich ist aber auch die mechanische Stabilität erhöht. Auch dies hat mehrere Vorteile. Insbesondere bei Anordnungen, bei denen der Flüssigkeitsdruck im Hohlraum der Bipolarplatte deutlich höher ist als der entgegengesetzte Gasdruck der gasförmigen Medien, wird somit eine Stabilität erreicht, welche gegen das "Aufblähen" von Bipolarplatten wirkt. Dadurch ist auch eine bessere Verpressung der somit "ebenen" Bipolarplatten gegeneinander möglich, Kontaktprobleme treten auch seltener auf. Außerdem ist festzustellen, dass durch gezielt ausgerichtete Verschweißungen im Bereich des aktiven Felds (d.h. vorliegend z.B. des Hohlraums 3) durch die Verschwei-βungen der Medienfluss kontrolliert werden kann. Das heißt, dass nicht nur die gasförmigen Medien an der Außenseite der Bipolarplatte geregelt geführt werden, sondern auch das innerhalb des Hohlraums der Bipolarplatte strömende Kühlmedium, um somit eine noch gleichmäßigere Wärmeverteilung zu erreichen und den Wirkungsgrad der Brennstoffzellenanordnung zu erhöhen.

## Patentansprüche

1. Verfahren zur Herstellung einer Bipolarplatte (1) für Brennstoffzellensysteme, wobei zwei im wesentlichen flache plattenförmige Metallabschnitte (2a, 2b) unter Bildung einer Bipolarplatte miteinander verbunden werden, und die Verbindung der Metallabschnitte durch Laserstrahlschweißen erfolgt, **dadurch gekennzeichnet, dass** die im wesentlichen flachen plattenförmigen Metallabschnitte während der Laserverschweißung spaltfrei aufeinander angeordnet werden und zur Verringerung des Wärmeeintrags beim Schweißen die Schweißnähte als hintereinander angeordnete aber voneinander beabstandete linienförmige Abschnitte ausgeführt werden.

2. Verfahren nach Anspruch 1, **dadurch gekennzeichnet, dass** das Laserschweißen mittels eines YAG-, CO₂-Lasers oder eines Diodenlasers durchgeführt wird.

3. Verfahren nach einem der vorhergehenden Ansprüche, **dadurch gekennzeichnet, dass** die Verschweißung im Randbereich der Metallabschnitte im wesentlichen umlaufend stattfindet zur Schaffung eines flüssigkeitsdichten Hohlraums (3) zwischen den Metallabschnitten (2a, 2b).

4. Verfahren nach Anspruch 3, **dadurch gekennzeichnet, dass** der Hohlraum (3) mindestens eine Öffnung zur Kühlmittelzu- und/oder -abfuhr aufweist.

5. Verfahren nach einem der vorhergehenden Ansprüche, **dadurch gekennzeichnet, dass** Metallabschnitte (2a, 2b) mit einer Stärke von 0,05 bis 3 mm verwendet werden.

6. Verfahren nach einem der vorhergehenden Ansprüche, **dadurch gekennzeichnet, dass** als Material der Metallabschnitte (2a, 2b) Edelstahl, Titan, Nickel, Nickellegierung, plattierte metallische Werkstoffe oder Aluminium verwendet wird.

7. Verfahren nach einem der Ansprüche 3 bis 6, **dadurch gekennzeichnet, dass** die Plattenabschnitte im Bereich des Hohlraums (3) zumindest bereichsweise durch Punktnähte (4), Steppnähte (5), Mehrfachdichtnähte (12, 13, 14, 15) oder Wellennähte (6) verschweißt werden.

8. Bipolarplatte, hergestellt in einem Verfahren nach einem der vorherigen Patentansprüche, **dadurch gekennzeichnet, dass** diese zwei miteinander verschweißte Metallabschnitte (2a, 2b) aufweist, welche zumindest bereichsweise mit einer zur Verringerung des Wärmeeintrags beim Schweißen unterbrochenen Naht versehen ist, wobei diese Schweißnaht hintereinander angeordnet aber voneinander beabstandete linienförmige Abschnitte aufweist.

## Claims

1. Method of manufacturing a bipolar plate (1) for fuel cell systems, in which two essentially flat plate-shaped metal sections (2a, 2b) are joined together, forming a bipolar plate, and the joining of the metal sections is effected by laser beam welding,
**characterised in that**
the essentially flat plate-shaped metal sections are positioned on top of each other without a gap during the laser welding process, and in order to reduce the heat input during welding, the welds are carried out in the form of linear sections positioned one behind the other but at a distance from each other.

2. Method as in claim 1,
**characterised in that**
the laser welding process is carried out by means of a YAG, CO₂ or diode laser.

3. Method as in one of the preceding claims,
**characterised in that**
the welding process in the edge area of the metal sections takes place essentially continuously in order to create a hollow space (3) between the metal sections (2a, 2b) that is impenetrable to liquid.

4. Method as in claim 3,
**characterised in that**
the hollow space (3) has at least one opening for the supply and discharge of coolant.

5. Method as in one of the preceding claims,
**characterised in that**
metal sections (2a, 2b) are used which have a thickness of between 0.05 and 3 mm.

6. Method as in one of the preceding claims,
**characterised in that**
the material used for the metal sections (2a, 2b) is stainless steel, titanium, nickel, nickel alloy, plated metallic materials or aluminium.

7. Method as in one of claims 3 to 6,
**characterised in that**
the plate sections in the area of the hollow space (3) are welded, at least in some areas, by spot welds (4), stitch welds (5), multiple sealing welds (12, 13, 14, 15) or wavy welds (6).

8. Bipolar plate, produced by a method as in one of the preceding claims,
**characterised in that**
it has two metal sections (2a, 2b) that are welded together, which has, at least in some areas, a weld that is interrupted in order to reduce the heat input during the welding process, this weld having linear sections that are positioned one behind the other but at a distance from each other.

## Revendications

1. Procédé de fabrication d'une plaque bipolaire (1) pour des piles à combustible, dans lequel deux sections métalliques (2a, 2b) en forme de plaques sensiblement plates sont reliées l'une à l'autre en formant une plaque bipolaire, et la liaison entre les sections métalliques est réalisée par soudage au laser,
**caractérisé en ce que** les sections métalliques en forme de plaques sensiblement plates sont disposées l'une au-dessus de l'autre sans écartement lors du soudage au laser et, pour réduire l'apport thermique lors du soudage, les fils de soudure sont réalisés sous la forme de sections linéaires disposées l'une derrière l'autre, mais se trouvant à une certaine distance l'une de l'autre.

2. Procédé selon la revendication 1, **caractérisé en ce que** le soudage au laser est effectué à l'aide d'un laser YAG, CO₂, ou d'une diode laser.

3. Procédé selon l'une quelconque des revendications précédentes, **caractérisé en ce que** le soudage est réalisé de manière sensiblement circulaire dans la zone périphérique des sections métalliques, afin de créer un espace creux étanche aux liquides (3) entre les sections métalliques (2a, 2b).

4. Procédé selon la revendication 3, **caractérisé en ce que** l'espace creux (3) présente au moins une ouverture pour l'alimentation et / ou l'évacuation de produit réfrigérant.

5. Procédé selon l'une quelconque des revendications précédentes, **caractérisé en ce qu'**on utilise des sections métalliques (2a, 2b) ayant une épaisseur de 0,05 à 3 mm.

6. Procédé selon l'une quelconque des revendications précédentes, **caractérisé en ce que** le matériau des sections métalliques (2a, 2b) est de l'acier spécial, du titane, du nickel, un alliage de nickel, des substances métalliques plaquées ou de l'aluminium.

7. Procédé selon l'une quelconque des revendications 3 à 6, **caractérisé en ce que** les sections de plaque sont soudées dans la zone de l'espace creux (3) au moins par zone à l'aide de soudage par point (4), soudage en ligne continue par points (5), soudage par points à plusieurs épaisseurs (12, 13, 14, 15) ou soudage par fils ondulés (6).

8. Plaque bipolaire fabriquée à l'aide d'un procédé selon l'une quelconque des revendications précédentes, **caractérisée en ce qu'**elle présente deux sections métalliques (2a, 2b) soudées l'une à l'autre, dotées au moins par zone d'un fil interrompu destiné à réduire l'apport thermique lors du soudage, ce fil de soudure présentant des sections linéaires disposées l'une derrière l'autre mais espacées l'une de l'autre.
